# EUROPEAN PATENT SPECIFICATION

(11) **EP 3 239 796 B1**
(45) Date of publication and mention of the grant of the patent: **10.04.2019**
(21) Application number: 16743292.1
(22) Date of filing: 25.01.2016
(51) Int. Cl.: G05B 23/02, B64G 1/28

(54) **FAILURE DIAGNOSTIC METHOD AND FAILURE DIAGNOSTIC SYSTEM**
FEHLERDIAGNOSEVERFAHREN UND FEHLERDIAGNOSESYSTEM
PROCÉDÉ DE DIAGNOSTIC DE DÉFAILLANCE ET DISPOSITIF DE DIAGNOSTIC DE DÉFAILLANCE

(30) Priority: 27.01.2015 JP 2015013754
(43) Date of publication of application: 01.11.2017
(73) Proprietor: Mitsubishi Heavy Industries, Ltd., Tokyo 108-8215 (JP)
(72) Inventor: NAGASE, Tetsuya, Tokyo 108-8215 (JP)
(74) Representative: Henkel, Breuer & Partner
(86) International application number: PCT/JP2016/052009
(87) International publication number: WO 2016/121689

(56) References cited:
- WO-A1-2010/061681
- JP-A- H 086 635
- JP-A- 2007 213 194
- JP-A- 2007 213 194
- US-A1- 2011 307 220

## Description

### Field

The present invention relates to an error diagnosis method and an error diagnosis system.

### Background

JP 2007-213194 A discloses a data accumulation means accumulating data acquired from the monitoring object. A reference space preparing means prepares a reference space based on the data accumulated in the data accumulation means. A data acquiring means acquires the data from the monitoring object. A distance calculating means calculates a Mahalanobis distance by inputting the data obtained by the data acquiring means 103 into the reference space prepared by the reference space preparing means.

US 2011-307220 A1 discloses a method and a system for identifying failures in an aeroengine. The system includes: a mechanism defining a set of standardized indicators representative of operation of the aeroengine; a mechanism constructing an anomaly vector representative of a behavior of the engine as a function of the set of standardized indicators; a mechanism selecting in an event of an anomaly being revealed by the anomaly vector a subset of reference vectors having directions belonging to a determined neighborhood of a direction of the anomaly vector, the subset of reference vectors being selected from a set of reference vectors associated with failures of the aeroengine and determined using criteria established by experts; and a mechanism identifying failures associated with the subset of reference vectors.

Typically, an anormaly diagnosis device (see, e.g., Patent Literature 1) configured to diagnose an anormaly of a plant and a plant operation state monitoring method (see, e.g., Patent Literature 2) for determining whether or not a plant is in normal operation have been known. In the inventions described in Patent Literatures 1 and 2, a Mahalanobis distance is obtained, and the presence or absence of the anormaly is diagnosed by comparing between the obtained Mahalanobis distance and a preset threshold.

### Citation List

### Patent Literature

Patent Literature 1: Japanese Laid-open Patent Publication No. 2014-35282
Patent Literature 2: Japanese Laid-open Patent Publication No. 2013-101718

### Summary

### Technical Problem

Error diagnosis for diagnosing error such as an anormaly or failure may include not only error detection for detecting whether or not error is caused at a target machine targeted for diagnosis, but also identification of an error portion of the target machine. Generally in error detection and error portion identification, an error analyzing model is structured based on the estimated error portion of the target machine. Then, it is determined whether or not an output analytical signal as an output signal of the target machine obtained by analysis of the error analyzing model and an actual output signal as the output signal of the target machine match with each other. When the output analytical signal and the actual output signal match with each other, it is assumed that error is caused at the estimated error portion, and therefore, error detection and error portion identification are simultaneously performed. On the other hand, when the output analytical signal and the actual output signal do not match with each other, it is assumed that no error is caused at the estimated error portion. Thus, the error analyzing model is structured again based on another error portion, and such processing is repeated until the output analytical signal and the actual output signal match with each other.

However, in the case of simultaneously performing error detection and error portion identification, it takes time until detection of error. Particularly in the case of controlling the target machine based on error detection, such error detection needs to be promptly performed. Specifically, when, e.g., a rocket is applied as a machine used for the space field and attitude control of the rocket is performed, error needs to be promptly detected.

Thus, the present invention is intended to provide an error diagnosis method according to claim 1 and an error diagnosis system according to claim 3 configured so that error can be promptly detected.

### Solution to Problem

An error diagnosis method comprises: a parameter value obtaining step of obtaining parameter values of multiple parameters contained in at least one of an input signal to be input to a target machine targeted for error diagnosis or an output signal output from the target machine; an error detection step of detecting, using a multidimensional statistical technique, whether or not error is caused at the target machine based on the parameter values obtained at the parameter value obtaining step; and an error portion estimation step of estimating an error portion of the target machine based on characteristic data obtained at the error detection step.

In an error diagnosis system, parameter values of multiple parameters contained in at least one of an input signal to be input to a target machine targeted for error diagnosis or an output signal output from the target machine are obtained, based on the obtained parameter values, it is, using a multidimensional statistical technique, detected whether or not error is caused at the target machine, and an error portion of the target machine is estimated based on characteristic data obtained by the multidimensional statistical technique.

According to such a configuration, the error portion of the target machine can be estimated after detection of error of the target machine. Thus, error can be detected in advance without simultaneously performing error detection and error portion identification, and therefore error can be promptly detected. Note that error of the target machine is not limited to a failure state of the target machine, and may include an abnormal state before failure of the target machine.

It is preferable to further comprises a matching determination step of structuring an error analyzing model for analyzing the target machine based on the error portion of the target machine estimated at the error portion estimation step, thereby determining whether or not an output analytical signal of the target machine obtained by analysis of the error analyzing model and the output signal output from the target machine match with each other.

It is preferable that an error analyzing model for analyzing the target machine is structured based on the estimated error portion of the target machine, and it is determined whether or not an output analytical signal of the target machine obtained by analysis of the error analyzing model and the output signal output from the target machine match with each other.

According to such a configuration, the match between the output analytical signal based on the estimated error portion and the actual output signal of the target machine is determined so that the error portion of the target machine can be identified.

It is preferable that the multidimensional statistical technique is a Mahalanobis Taguchi method, at the error detection step, a Mahalanobis distance from a preset unit space is calculated using the Mahalanobis Taguchi method, and it is detected whether or not the error is caused at the target machine based on the calculated Mahalanobis distance, and at the error portion estimation step, the error portion of the target machine is estimated based on the Mahalanobis distance as the characteristic data.

It is preferable that the multidimensional statistical technique is a Mahalanobis Taguchi method, a Mahalanobis distance from a preset unit space is calculated using the Mahalanobis Taguchi method, and it is detected whether or not the error is caused at the target machine based on the calculated Mahalanobis distance, and the error portion of the target machine is estimated based on the Mahalanobis distance calculated as the characteristic data by the Mahalanobis Taguchi method.

According to such a configuration, the Mahalanobis Taguchi method can be used at the error portion estimation step, and therefore, error can be detected with a high reliability. Moreover, the Mahalanobis distance calculated at the error portion estimation step can be used at the error portion estimation step, and therefore, the error portion can be accurately estimated.

It is preferable that the error portion estimation step includes: an item diagnosis step of selecting, using the Mahalanobis Taguchi method, the parameters having influence on the Mahalanobis distance calculated at the error detection step; and a machine error estimation step of estimating, using a Bayesian network, the error portion of the target machine based on the parameters selected at the item diagnosis step.

According to such a configuration, the optimal parameter having influence on error of the target machine can be, by the item diagnosis step, selected using the Mahalanobis distance calculated at the error detection step. Further, the Bayesian network is used at the machine error estimation step so that the error portion of the target machine can be accurately estimated from the selected parameter.

It is preferable that at the error portion estimation step, the item diagnosis step is performed when it is determined that no error is caused at the target machine in the error detection step, and the error portion estimation step further includes a parameter storage step of storing the parameters selected at the item diagnosis step.

According to such a configuration, even when it is determined that no error is caused at the target machine, the item diagnosis step is performed using the Mahalanobis distance calculated at the error detection step, and in this manner, the parameter being likely to have influence on error of the target machine can be selected in advance, and can be stored.

It is preferable that in the error portion estimation step, the machine error estimation step is performed based on the parameters stored at the parameter storage step, when it is determined that the error is caused at the target machine in the error detection step.

According to such a configuration, the parameter selected in advance and being likely to have influence on error of the target machine is used preferentially so that the error portion of the target machine can be estimated. Thus, the item diagnosis step can be skipped, and accordingly, the error portion can be promptly estimated.

### Brief Description of Drawings

FIG. 1 is a schematic diagram of an error diagnosis system of the present embodiment.
FIG. 2 is a diagram for describing operation of the error diagnosis system of the present embodiment.
FIG. 3 is a graph for describing a unit space and a Mahalanobis distance.
FIG. 4 is a graph for describing a graph of factorial effects.

### Description of Embodiments

An embodiment of the present invention will be described below in detail with reference to the drawings. In addition, when there are multiple embodiments, these embodiments can be combined together.

### Embodiment

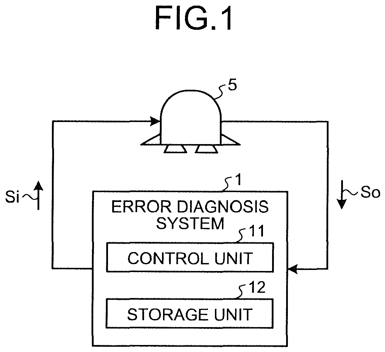

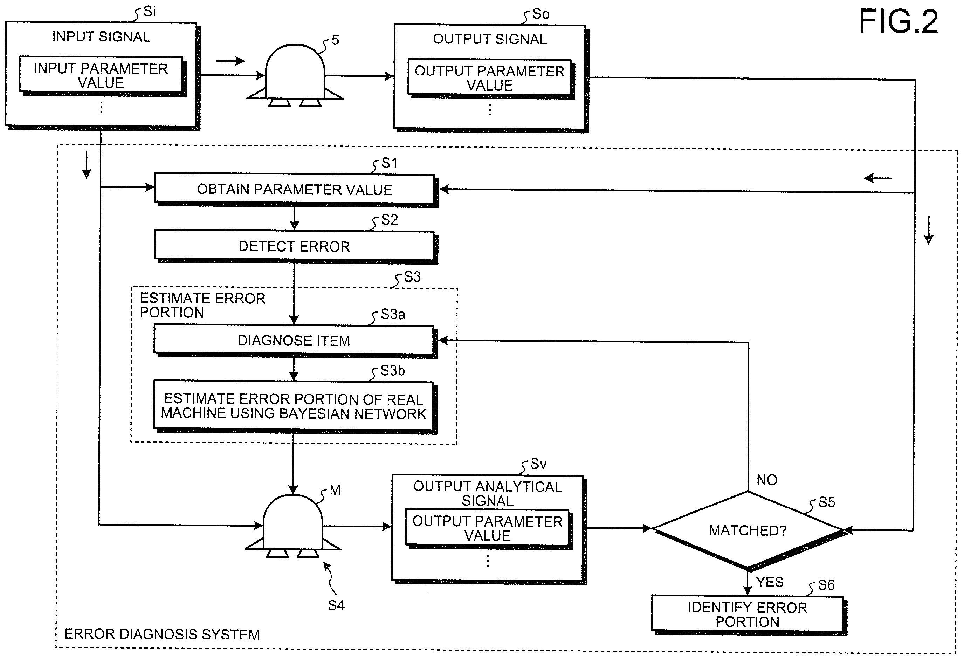

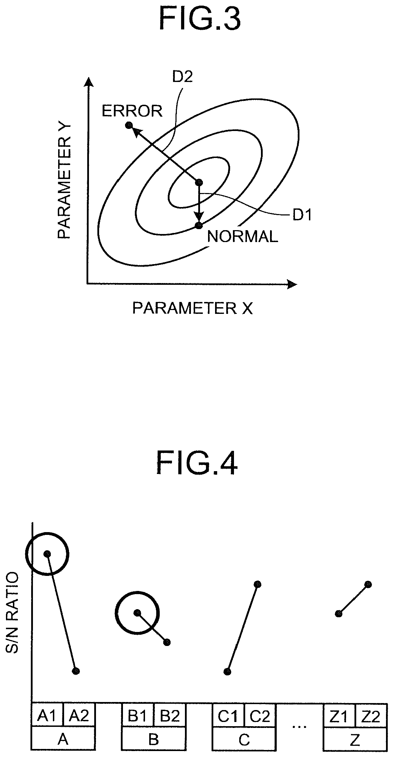

FIG. 1 is a schematic diagram of an error diagnosis system of the present embodiment. FIG. 2 is a diagram for describing operation of the error diagnosis system of the present embodiment. FIG. 3 is a graph for describing a unit space and a Mahalanobis distance. FIG. 4 is a graph for describing a graph of factorial effects.

As illustrated in FIG. 1, in an error diagnosis system 1, a real machine 5 such as an airplane or a flying object is applied as a target machine targeted for error diagnosis. Note that in the present embodiment, the real machine 5 will be simply described, but the real machine 5 is not limited, and may be applied to an industrial machine, a plant, and the like. The error diagnosis system 1 is particularly useful for the real machine 5 configured to perform control based on error detection. Moreover, error of the real machine 5 is not limited to a failure state of the real machine 5, and includes an abnormal state before failure of the real machine 5.

The error diagnosis system 1 includes a control unit 11 and a storage unit 12. The error diagnosis system 1 is configured to output an input signal Si to be input to the real machine 5 and to receive an output signal So output from the real machine 5. The storage unit 12 is configured to store, for example, various programs for error diagnosis and parameter values of various parameters contained in the input signal Si and the output signal So used for error diagnosis. Although will be described below in detail, the control unit 11 is configured to detect error of the real machine 5 and identify an error portion of the real machine 5 based on the input signal Si, the output signal So, and the like.

Next, the error diagnosis system 1 will be specifically described with reference to FIG. 2. In error diagnosis of the real machine 5, the error diagnosis system 1 executes various programs stored for error diagnosis in the storage unit 12, thereby performing a parameter value obtaining step S1, an error detection step S2, an error portion estimation step S3, an error analyzing step S4, a matching determination step S5, and an error portion identification step S6.

At the parameter value obtaining step S1, the error diagnosis system 1 obtains the input signal Si to be input to the real machine 5 and the output signal So output from the real machine 5. The input signal Si contains input parameter values of multiple input parameters used for control of the real machine 5, and the input parameters include, for example, information on environment around the real machine 5 or an operation command of the real machine 5. The output signal So contains output parameter values of multiple output parameters obtained from a measurement sensor configured to measure each portion of the real machine 5, and the output parameters include, for example, a pressure value, a temperature, a voltage value, and a current value at a predetermined portion, the output value of the real machine 5, the position of the real machine 5, the attitude of the real machine 5, and the velocity of the real machine 5. The error diagnosis system 1 stores, in the storage unit 12, the parameter values of the multiple parameters obtained at the parameter value obtaining step S1.

Note that at the parameter value obtaining step S1 of the present embodiment, the parameter values for the input signal Si and the output signal So are obtained, but the parameter values contained in at least one of the input signal Si or the output signal So may be obtained. There are no particular limitations as long as the multiple parameter values are obtained.

At the error detection step S2, a Mahalanobis distance D from a preset unit space F is calculated by using a Mahalanobis Taguchi method (a so-called MT method), based on the multiple parameter values obtained at the parameter value obtaining step S1. Based on the calculated Mahalanobis distance D, it is detected whether or not error is caused at the real machine 5. At this point, the storage unit 12 of the error diagnosis system 1 stores a multidimensional space illustrated in FIG. 3 based on the multiple parameters (e.g., a parameter X and a parameter Y). The unit space F as normal is set in advance within the multidimensional space. The unit space F is set based on multiple data points at which a correlation among the multiple parameter values is regarded as normal. Note that in the unit space F, multiple spaces expanding outward from the center may be formed.

The Mahalanobis distance D is a distance from the center of the unit space F, and is calculated using a predetermined calculation formula for calculating the Mahalanobis distance D. That is, the control unit 11 calculates the Mahalanobis distance D by substituting the multiple parameter values obtained at the parameter value obtaining step S1 into the predetermined calculation formula.

When the Mahalanobis distance D calculated by the control unit 11 is a Mahalanobis distance D1 on the inside of the unit space F as illustrated in FIG. 3, the control unit 11 detects, at the error detection step S2, that no error is caused at the real machine 5. On the other hand, when the Mahalanobis distance D calculated by the control unit 11 is a Mahalanobis distance D2 departing outward from the unit space F, the control unit 11 detects, at the error detection step S2, that error is caused at the real machine 5. Note that when the control unit 11 detects, at the error detection step S2, that no error is caused at the real machine 5, the control unit 11 repeatedly executes the error detection step S2 until detection of occurrence of error.

At the error portion estimation step S3, an error portion of the real machine 5 is estimated based on the Mahalanobis distance D calculated at the error detection step S2. Note that the estimated error portion may be one or more portions and is not limited. Specifically, the error portion estimation step S3 includes an item diagnosis step S3a and a real machine error estimation step (a machine error estimation step) S3b.

At the item diagnosis step S3a, a parameter having influence on the Mahalanobis distance D calculated at the error detection step S2 is selected using the Mahalanobis Taguchi method. Specifically, at the item diagnosis step S3a, allocation to a not-shown orthogonal table is, using the Mahalanobis Taguchi method, performed for the multiple parameters used for calculation of the Mahalanobis distance D. In the orthogonal table, different parameter values are allocated to each parameter. For example, parameter values A1 to Z1 and parameter values A2 to Z2 are allocated to predetermined parameters A to Z. Then, at the item diagnosis step S3a, a graph of factorial effects regarding an S/N ratio for each parameter as illustrated in FIG. 4 is generated based on the parameter values of the multiple parameters allocated to the orthogonal table.

FIG. 4 is the graph of factorial effects regarding the S/N ratio for each parameter, where the vertical axis represents the S/N ratio and the horizontal axis represents each parameter and the parameter values thereof. Note that the S/N ratio is generally defined as "SN RATIO = OUTPUT MAGNITUDE/DEVIATION FLUCTUATION," and indicates the magnitude of variation. That is, a greater S/N ratio results in smaller variation, and the S/N ratio has great influence on the Mahalanobis distance D in the present embodiment. From the graph of factorial effects based on the S/N ratio, the parameter having influence on the Mahalanobis distance D is selected. For example, the parameter for which the S/N ratio is greater than a preset threshold is selected, or the predetermined number of parameters is selected in the descending order of the S/N ratio.

At the real machine error estimation step S3b, the error portion of the real machine 5 is, using a Bayesian network, estimated based on the parameter selected at the item diagnosis step S3a. The Bayesian network is structured based on a so-called Bayes' theorem, and sets the probability of greatly influencing the parameter values of each parameter when an error event at a predetermined portion of the real machine 5 is caused. That is, in the Bayesian network, the error portion and the probability of influencing each parameter are associated with each other. Thus, at the real machine error estimation step S3b, the Bayesian network is used so that the error portion of the real machine 5 associated with the parameter selected at the item diagnosis step S3a can be estimated based on the probability. That is, at the real machine error estimation step S3b, the probability of occurrence of error at the predetermined portion of the real machine 5 is derived according to the parameter selected at the item diagnosis step S3a. Then, the control unit 11 estimates, as the error portion of the real machine 5, a portion with a high probability of occurrence of error derived at the real machine error estimation step S3b.

At the analyzing step S4, the control unit 11 structures an error analyzing model M for analyzing the real machine 5 based on the error portion of the real machine 5 estimated at the error portion estimation step S3. After structuring of the error analyzing model M, the control unit 11 provides the input parameter values of the input signal Si to the error analyzing model M and performs an analysis, thereby generating an output analytical signal Sv of the real machine 5 as an analysis result.

At the matching determination step S5, the control unit 11 determines whether or not the output analytical signal Sv output at the error analyzing step S4 and the output signal So actually output from the real machine 5 match with each other. Specifically, the control unit 11 determines as matched (Step S5: Yes) when a deviation between an output parameter value of each parameter contained in the output analytical signal Sv and the output parameter value of each parameter contained in the output signal So falls within a predetermined range set in advance. Then, the processing proceeds to the error portion identification step S6. On the other hand, the control unit 11 determines as not matched (Step S5: No) when the deviation between the output parameter value of each parameter contained in the output analytical signal Sv and the output parameter value of each parameter contained in the output signal So falls outside the predetermined range set in advance. Then, the processing proceeds to the error portion estimation step S3 again, and is repeated until the control unit 11 determines as matched.

At the error portion identification step S6, when it is determined that the output analytical signal Sv and the output signal So match with each other at the matching determination step S5, the error portion estimated at the error portion estimation step S3 is identified as a portion where error is caused.

As described above, according to the present embodiment, the control unit 11 can estimate the error portion of the real machine 5 at the error portion estimation step S3, after detecting error of the real machine 5 at the error detection step S2. Then, the control unit 11 can identify the error portion of the real machine 5 at the error portion identification step S6 by determining on the match between the output analytical signal Sv and the output signal So at the matching determination step S5. Thus, the control unit 11 can detect error in advance without simultaneously performing error detection and error portion identification, and therefore, can promptly detect error.

Moreover, according to the present embodiment, the optimal parameter having influence on error of the real machine 5 can be selected using the Mahalanobis distance D calculated at the error detection step S2, by performing the item diagnosis step S3a. Further, the Bayesian network is used at the real machine error estimation step S3b so that the error portion of the real machine 5 can be accurately estimated from the selected parameter.

Note that in the present embodiment, when it is detected that no error is caused at the real machine 5 in the error detection step S2, the control unit 11 repeatedly executes the error detection step S2 until detection of occurrence of error. However, it is not limited to such a configuration, and the error diagnosis system 1 of the present embodiment may be configured as follows.

Specifically, when it is detected that no error is caused at the real machine 5 in the error detection step S2, the control unit 11 executes the item diagnosis step S3a to select the parameter having influence on the Mahalanobis distance D, and then, executes the parameter storage step of storing the parameter selected at the item diagnosis step S3a in the storage unit 12. More specifically, the unit space F is divided into a normal unit space and a unit space where no error is caused, but caution is needed. Then, when the Mahalanobis distance D is on the inside of the unit space where no error is caused but caution is needed at the error detection step S2, the control unit 11 stores the parameter having influence on such a Mahalanobis distance D in the storage unit 12. Then, when it is detected that error is caused at the real machine 5 in the repeatedly-executed error detection step S2, the control unit 11 performs the real machine error estimation step S3b based on the parameter stored at the parameter storage step. Note that when the error analyzing step S4 and the matching determination step S5 using the parameter stored at the parameter storage step is executed and it is determined as not matched, the control unit 11 may perform the item diagnosis step S3a.

According to such a configuration, even when it is determined that no error is caused at the real machine 5, the item diagnosis step S3a is performed using the Mahalanobis distance D calculated at the error detection step S2, and in this manner, the parameter being likely to have influence on error of the real machine 5 can be selected in advance, and can be stored in the storage unit 12. Subsequently, when it is determined that error is caused at the real machine 5, the parameter selected in advance is used preferentially so that the item diagnosis step S3a can be skipped, and therefore, the real machine error estimation step S3b can be promptly performed.

Moreover, in the present embodiment, the Mahalanobis Taguchi method is used as a multidimensional statistical technique, but the present invention is not limited to such a technique. Other multidimensional statistical techniques, such as a support vector machine (SVM), may be applied.

### Reference Signs List

- 1: ERROR DIAGNOSIS SYSTEM
- 5: REAL MACHINE
- 11: CONTROL UNIT
- 12: STORAGE UNIT
- Si: INPUT SIGNAL
- So: OUTPUT SIGNAL
- Sv: OUTPUT ANALYTICAL SIGNAL
- F: UNIT SPACE
- D: MAHALANOBIS DISTANCE
- M: ERROR ANALYZING MODEL

## Claims

1. An error diagnosis method comprising:
a parameter value obtaining step (S1) of obtaining parameter values of multiple parameters contained in at least one of an input signal (Si) to be input to a target machine (5) targeted for error diagnosis or an output signal (So) output from the target machine (5);
an error detection step (S2) of detecting, using a multidimensional statistical technique, whether or not error is caused at the target machine (5) based on the parameter values obtained at the parameter value obtaining step (S1); and
an error portion estimation step (S3) of estimating an error portion of the target machine (5) based on characteristic data obtained at the error detection step (S2),
wherein:
the multidimensional statistical technique is a Mahalanobis Taguchi method,
at the error detection step (S2), a Mahalanobis distance from a preset unit space is calculated using the Mahalanobis Taguchi method, and it is detected whether or not the error is caused at the target machine (5) based on the calculated Mahalanobis distance, and
at the error portion estimation step (S3), the error portion of the target machine (5) is estimated based on the Mahalanobis distance as the characteristic data,
the error portion estimation step (S3) includes:
an item diagnosis step (S3a) of selecting, using the Mahalanobis Taguchi method, the parameters having influence on the Mahalanobis distance calculated at the error detection step (S2), and
a machine error estimation step (S3b) of estimating, using a Bayesian network, the error portion of the target machine (5) based on the parameters selected at the item diagnosis step (S3a), wherein
at the error portion estimation step (S3), the item diagnosis step (S3a) is performed when it is determined that no error is caused at the target machine (5) in the error detection step (S2), and
the error portion estimation step (S3) further includes a parameter storage step of storing the parameters selected at the item diagnosis step (S3a) when it is determined that no error is caused at the target machine (5) in the error detection step (S2),
in the error portion estimation step (S3), the machine error estimation step (S3b) is performed based on the parameters stored at the parameter storage step when it is determined that the error is caused at the target machine (5) in the error detection step (S2).

2. The error diagnosis method according to claim 1, further comprising:
a matching determination step (S5) of structuring an error analyzing model (M) for analyzing the target machine (5) based on the error portion of the target machine (5) estimated at the error portion estimation step (S3), thereby determining whether or not an output analytical signal (Sv) of the target machine (5) obtained by analysis of the error analyzing model (M) and the output signal (So) output from the target machine (5) match with each other.

3. An error diagnosis system (1) comprising a control unit (11) and a storage unit (12), the system being configured to carry out a method according to claims 1 or 2.

4. The error diagnosis system (1) according to claim 3, wherein in the control unit (11),
an error analyzing model (M) for analyzing the target machine (5) is structured based on the estimated error portion of the target machine (5), and it is determined whether or not an output analytical signal (Sv) of the target machine (5) obtained by analysis of the error analyzing model (M) and the output signal (So) output from the target machine (5) match with each other.

## Patentansprüche

1. Fehlerdiagnoseverfahren mit:
einem Parameterwert-Erhaltungsschritt (S1) zum Erhalten von Parameterwerten von mehreren Parametern, die in zumindest einem Eingangssignal (Si), das einer Zielmaschine (5) eingegeben werden soll, welche Ziel der Fehlerdiagnose ist, oder in einem von der Zielmaschine (5) ausgegebenen Ausgabesignal (So) enthalten sind;
einem Fehlererfassungsschritt (S2) zum Erfassen unter Verwendung einer mehrdimensionalen statistischen Technik beruhend auf dem in dem Parametererhaltungsschritt (S1) erhaltenen Parameterwert, ob ein Fehler an der Zielmaschine (5) verursacht wird oder nicht;
einem Fehlerabschnitt-Abchätzungsschritt (S3) zum Abschätzen eines Fehlerabschnitts der Zielmaschine (5) beruhend auf einem in dem Fehlererfassungsschritt (S2) erhaltenen Kennwert,
wobei:
die mehrdimensionale statistische Technik ein Mahalanobis-Taguchi-Verfahren ist,
bei dem Fehlererfassungsschritt (S2) ein Mahalanobis-Abstand von einem vorgegebenen Einheitsraum unter Verwendung des Mahalanobis-Taguchi-Verfahrens berechnet wird und beruhend auf dem berechneten Mahalanobis-Abstand erfasst wird, ob der Fehler an der Zielmaschine (5) verursacht wird, und
bei dem Fehlerabschnitt-Abschätzungsschritt (S3) der Fehlerabschnitt der Zielmaschine (5) beruhend auf dem Mahalanobis-Abstand als Kennwert bestimmt wird,
der Fehlerabschnitt-Abschätzungsschritt (S3) umfasst:
einen Item-Diagnoseschritt (S3a) zum Auswählen unter Verwendung des Mahalanobis-Taguchi-Verfahrens der Parameter mit Einfluss auf den in dem Fehlererfassungsschritt (S2) berechneten Mahalanobis-Abstand, und
einen Maschinenfehler-Abschätzungsschritt (S3b) zum Abschätzen unter Verwendung eines Bayesian-Netzwerks des Fehlerteils der Zielmaschine (5) beruhend auf den in dem Item-Diagnoseschritt (S3a) ausgewählten Parametern,
wobei in dem Fehlerabschnitt-Abschätzungsschritt (S3) der Item-Diagnoseschritt (S3a) ausgeführt wird, wenn in dem Fehlererfassungsschritt (S2) bestimmt wird, dass kein Fehler an der Zielmaschine (5) verursacht wird, und
wobei der Fehlerabschnitt-Abschätzungsschritt (S3) des Weiteren einen Parameterspeicherschritt zum Speichern der in dem Item-Diagnoseschritt (S3a) ausgewählten Parametern umfasst, wenn in dem Fehlererfassungsschritt (S2) bestimmt wurde, dass kein Fehler an der Zielmaschine (5) verursacht wurde,
wobei in dem Fehlerabschnitt-Abschätzungsschritt (S3) der Maschinenfehler-Abschätzungsschritt (S3b) beruhend auf den Parametern durchgeführt wird, die in dem Parameterspeicherschritt gespeichert wurden, wenn in dem Fehlererfassungsschritt (S2) bestimmt wurde, dass der Fehler an der Zielmaschine (5) verursacht wurde.

2. Das Fehlerdiagnoseverfahren nach Anspruch 1, des Weiteren mit einem Übereinstimmungs-Bestimmungsschritt (S5) zum Strukturieren eines Fehleranalysemodels (M) zum Analysieren der Zielmaschine (5) beruhend auf dem Fehlerabschnitt der Zielmaschine (5), das in dem Fehlerabschnitt-Abschätzungsschritt (S3) abgeschätzt wurde, wobei bestimmt wird, ob ein ausgegebenes analytisches Signal (Sv) der Zielmaschine (5), das durch Analysieren des Fehleranalysemodels (M) erhalten wurde, und das Ausgabesignal (So), das von der Zielmaschine (5) ausgegeben wird, miteinander übereinstimmen oder nicht.

3. Ein Fehlerdiagnosesystem (1) mit einer Steuereinheit (11) und einer Speichereinheit (12), wobei das System ausgestaltet ist, um ein Verfahren nach den Ansprüchen 1 oder 2 auszuführen.

4. Das Fehlerdiagnosesystem (1) nach Anspruch 3, wobei in der Steuereinheit (11):
ein Fehleranalysemodel (M) zum Analysieren der Zielmaschine (5) beruhend auf dem abgeschätzten Fehlerabschnitt der Zielmaschine (5) strukturiert wird, und bestimmt wird, ob ein ausgegebenes analytisches Signal (Sv) der Zielmaschine (5), das durch Analyse des Fehleranalysemodels (M) erhalten wird, und das Ausgabesignal (So), das von der Zielmaschine (5) ausgegeben wird, miteinander übereinstimmen.

## Revendications

1. Procédé de diagnostic de défaillance comprenant :
une étape d'obtention de valeurs de paramètre (S1) consistant à obtenir des valeurs de paramètre de multiples paramètres contenus dans au moins un d'un signal d'entrée (Si) à entrer dans une machine cible (5) ciblée pour un diagnostic de défaillance ou d'un signal de sortie (So) délivré en sortie de la machine cible (5) ;
une étape de détection de défaillance (S2) consistant à détecter, à l'aide d'une technique statistique multidimensionnelle, si une défaillance est causée ou non au niveau de la machine cible (5) sur la base des valeurs de paramètre obtenues à l'étape d'obtention de valeurs de paramètre (S1) ; et
une étape d'estimation de partie de défaillance (S3) consistant à estimer une partie de défaillance de la machine cible (5) sur la base de données caractéristiques obtenues à l'étape de détection de défaillance (S2),
dans lequel :
la technique statistique multidimensionnelle est un procédé de Mahalanobis Taguchi,
à l'étape de détection de défaillance (S2), une distance de Mahalanobis depuis un espace unitaire prédéfini est calculée en utilisant la méthode de Mahalanobis Taguchi, et il est détecté si la défaillance est causée ou non au niveau de la machine cible (5) sur la base de la distance de Mahalanobis calculée, et
à l'étape d'estimation de partie de défaillance (S3), la partie de défaillance de la machine cible (5) est estimée sur la base de la distance de Mahalanobis en tant que données caractéristiques,
l'étape d'estimation de partie de défaillance (S3) inclut :
une étape de diagnostic d'élément (S3a) consistant à sélectionner, en utilisant la méthode de Mahalanobis Taguchi, les paramètres ayant une influence sur la distance de Mahalanobis calculée à l'étape de détection de défaillance (S2), et
une étape d'estimation de défaillance de machine (S3b) consistant à estimer, en utilisant un réseau bayésien, la partie de défaillance de la machine cible (5) sur la base des paramètres sélectionnés à l'étape de diagnostic d'élément (S3a), dans lequel
à l'étape d'estimation de partie de défaillance (S3), l'étape de diagnostic d'élément (S3a) est réalisée lorsqu'il est déterminé qu'aucune défaillance n'est causée au niveau de la machine cible (5) au cours de l'étape de détection de défaillance (S2), et
l'étape d'estimation de partie de défaillance (S3) inclut en outre une étape de stockage de paramètres consistant à stocker les paramètres sélectionnés à l'étape de diagnostic d'élément (S3a) lorsqu'il est déterminé qu'aucune défaillance n'est causée au niveau de la machine cible (5) au cours de l'étape de détection de défaillance (S2),
au cours de l'étape d'estimation de partie de défaillance (S3), l'étape d'estimation de défaillance de machine (S3b) est réalisée sur la base des paramètres stockés à l'étape de stockage de paramètres lorsqu'il est déterminé que la défaillance est causée au niveau de la machine cible (5) au cours de l'étape de détection de défaillance (S2).

2. Procédé de diagnostic de défaillance selon la revendication 1, comprenant en outre :
une étape de détermination de correspondance (S5) consistant à structurer un modèle d'analyse de défaillance (M) pour analyser la machine cible (5) sur la base de la partie de défaillance de la machine cible (5) estimée à l'étape d'estimation de partie de défaillance (S3), en déterminant ainsi si un signal analytique de sortie (Sv) de la machine cible (5) obtenu par analyse du modèle d'analyse de défaillance (M) et le signal de sortie (So) délivré en sortie de la machine cible (5) correspondent ou non l'un à l'autre.

3. Système de diagnostic de défaillance (1) comprenant une unité de commande (11) et une unité de stockage (12), le système étant configuré pour effectuer un procédé selon les revendications 1 ou 2.

4. Système de diagnostic de défaillance (1) selon la revendication 3, dans lequel, dans l'unité de commande (11),
un modèle d'analyse de défaillance (M) pour analyser la machine cible (5) est structuré sur la base de la partie de défaillance estimée de la machine cible (5), et il est déterminé si un signal analytique de sortie (Sv) de la machine cible (5) obtenu par analyse du modèle d'analyse de défaillance (M) et le signal de sortie (So) délivré en sortie de la machine cible (5) correspondent ou non l'un à l'autre.
